# EUROPEAN PATENT SPECIFICATION

(11) **EP 2 977 838 B1**
(45) Date of publication and mention of the grant of the patent: **27.09.2023**
(21) Application number: 14178557.6
(22) Date of filing: 25.07.2014
(51) Int. Cl.: G05B 19/00, G05B 23/00, G06F 9/00, G06F 21/00, H02H 3/00, H02H 7/26

(54) **Process of monitoring intelligent electronic devices installed in an electrical power system**
Verfahren zur Überwachung intelligenter elektronischer Vorrichtungen, die in einem elektrischen Stromversorgungssystem installiert sind
Procédé de surveillance de dispositifs électroniques intelligents installés dans un système d'alimentation électrique

(43) Date of publication of application: 27.01.2016
(73) Proprietor: General Electric Technology GmbH, 5400 Baden (CH)
(72) Inventor: Richards, Simon, Staffordshire, WS15 3DZ (GB); Robinson, Neil, Staffordshire, ST16 1AN (GB); Vieira de Jesus, Joao, Staffordshire, ST16 1FA (GB)
(74) Representative: Openshaw & Co.

(56) References cited:
- WO-A1-2014/035992
- US-A1- 2002 173 927
- US-A1- 2007 055 889

## Description

### Technical Field and Prior Art

The invention relates to a method of monitoring and/or configuring a remote Intelligent Electronic Device (IED) installed in an electrical power system, said remote IED linked with a local IED by a teleprotection link, said local IED, remote IED and teleprotection link forming a protection scheme intended to protect specific circuits of the electrical power system.

Intelligent Electronic Devices are installed in electrical power systems, typically in an electricity generation, transmission, distribution, industrial or transport system. The IEDs are sited in electrical substations, and their purpose is to measure, protect, control and monitor the system to which they are connected. The topic of the invention refers to IEDs which protect the power system. So, these IEDs are also called "protection relays".

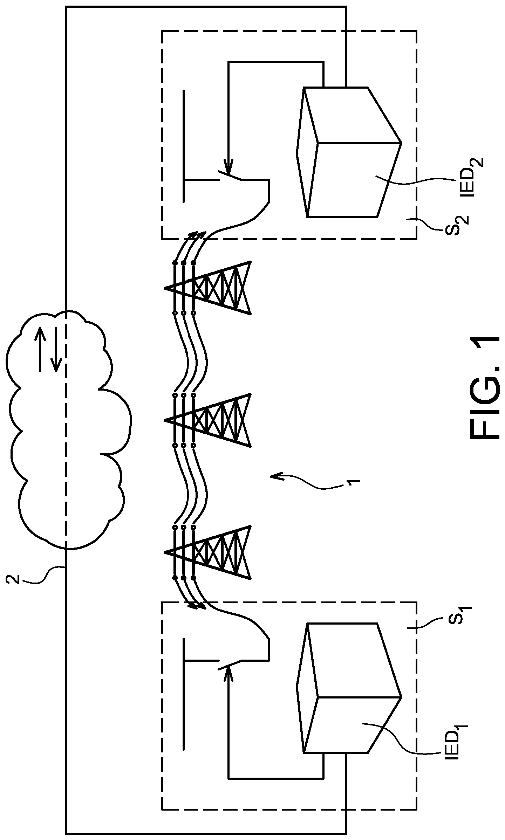

The figure 1 depicts an example of an electric power transmission system according to the prior art. The electric power transmission system comprises an overhead power line 1 and two sub-stations S₁, S₂. Each sub-station Sᵢ (i=1, 2) houses an Intelligent Electronic Device IEDᵢ. Each Intelligent Electronic Device IEDᵢ is connected to the equipment of the sub-station Sᵢ and generates commands to control this equipment. A communication link 2, also referred as "teleprotection link", connects the two Intelligent Electronic Devices IEDᵢ.

The two Intelligent Electronic Devices IEDᵢ (i=1, 2) and the teleprotection link 2 constitute a protection scheme intended to protect specific circuits of the electrical power system. The two Intelligent Electronic Devices IEDᵢ (i=1, 2) communicate with each other by means of the internal communication link 2. By receiving data from each end of the internal communication link, the protection scheme is better in discriminating whether any detected fault is within the protected circuit, or is outside of the relaying zone.

The protection relays require a degree of interaction with substation personnel from time to time. This includes monitoring and/or configuring actions to apply and control the relays (such as configuration, setting and testing), to maintain and troubleshoot, to test the scheme periodically, to obtain protected circuit fault data, and to upgrade the resident software.

Different ways are known to operate the above mentioned actions.

Typically, such actions require that one or more personnel visit the substations at multiple terminals of the power system, which require significant travel time and cost in order to attend each substation.

The typical types of protection relays used in a geographically-dispersed teleprotection scheme operate on current differential or distance protection principles. It is typical that current differential relays provide a basic level of access to remote end relays. Such basic access typically includes:
- The means to read current and voltage measurement values from the remote end(s), by means of continuous data communicated from the remote end(s)
- The means to remove or reinstate one of the relay terminals from the scheme, for example to temporarily reconfigure a 3-ended differential scheme to a 2 terminal one
- The means to send binary commands and status information between the relays

It is also possible to obtain access remotely to substations by means of an existing communication channel to the substation. Plenty of digital substation control systems allow this. However this access is typically from a central location such as a national/regional control centre or a maintenance workstation, direct to a substation and the relays within it.

Alternatively, additional devices may be introduced into substations, in order to provide a link off-site to remotely-stationed personnel. Examples exist whereby 3G mobile links can be used to achieve such a connection, for example using virtual machine and remote desktop access type approaches. A problem is that additional equipment over and above the standard protection relay scheme needs to be added.

It is common also to have discrete teleprotection functions within substations, in which case data can be exchanged between substations. This data can include voice, status, binary commands (intertrips between circuit breakers at terminals, permissive or blocking signals), file transfer, Ethernet traffic etc. The teleprotection link is provided by separate devices, outside of the protection relays.

In decentralised busbar protection schemes, it is possible to interact with bay (feeder) protection devices from the central unit in the scheme. However, these schemes are installed within a single substation (all equipment typically no more than 2km dispersed).

Also, the IEC 61850-90-5 standard allows that a protection relay can communicate to another substation. However, it does not seek to propose ways that a user can use the communication channel for the purpose of configuration, setting and testing of remote devices.

All the prior art solutions require a dedicated communication connection which imposes additional equipment and therefore additional cost. The invention does not have such a drawback.

US 2007/055889 A1 discloses an intelligent electronic device with multiple functionalities that may include multiple secure accesses including a sensor coupled with a processor. The sensor may sense electrical parameters in an electrical circuit and generate signals indicative of the electrical parameters for the processor.

WO 2014/035992 A1 discloses selectively enabling a primary communication channel upon receipt of enablement instructions received via a secondary communication channel. A first intelligent electronic device may be connected to a second IED via a primary communication channel.

US 2002/0173927 A1 discloses a test system that provides conventional analog outputs that allow application of power system conditions simulation to a device under test.

### Description of the invention

Indeed, the invention relates to a method according to appended claim 1. In the following, apparatus and/or methods referred to as embodiments that nevertheless do not fall within the scope of the claims should be understood as examples useful for understanding the invention.

Preferred embodiments are described in the dependent claims. The invention is set out in the appended set of claims.

Advantageously, the process of the invention proposes to use the protection communication link to start the maintenance actions relating to all or part of the IEDs of the power system from a single IED of the system.

The interaction with remote terminal relays is achieved by means of using any available bandwidth of the protection communication link between the relays. This approach is particularly useful as in many cases there is no reliable telecommunications link to the substation other than the protection communication link.

By the fact that the teleprotection link has a mission-critical task on the power system, the teleprotection link is fast, dependable and secure. Thus, where communication bandwidth remains, this link is well-suited to support personnel interaction with remote terminal relays. The personnel (typically field technicians/engineers) would effectively access a relay at one local end, and the relays in the scheme have the intelligence to manage a "tunnel" to the remote end relay to which access is required.

### Brief description of the figures

Other characteristic and advantages of the invention will become clearer upon reading a preferred embodiment made in reference to the attached figures among which:
- Figure 1 depicts an example of an electric power transmission system according to the prior art; and
- Figure 2 depicts an example of an electric power transmission system according to the invention.

### Detailed description of a preferred embodiment

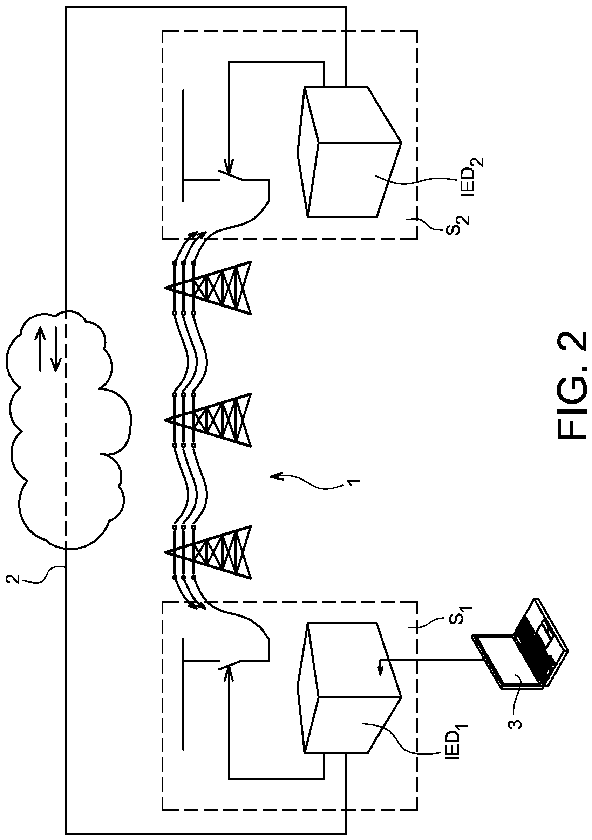

The figure 2 depicts an example of an electric power transmission system according to the invention.

According to the invention, a computer 3 is linked to the Intelligent Electronic Device S₁ of the electric power system. The computer 3 contains a software able to address the different IEDs so as to activate the maintenance programs of the these IEDs. The way data coming from the computer 3 reaches the different IEDs is via the communication link 2, accessed through the Intelligent Electronic Device S₁. First, this requires that an authorised technician/engineer makes a connection with the protection relay S₁ at the local end, typically by "logging-on" with a software loaded in the computer 3 . Indeed, there is the need to authenticate the user to check her/his authorisation to perform this log-on.

In prior art solutions, the user performs commissioning, test and maintenance actions for the local relay only, plus, in some cases, the few limited actions mentioned above (cf. the basic level of access to remote end relays mentioned in pages 2-3).

According to the invention, the user performs commissioning, test and maintenance actions for any remote relay. The software which implements the process of the invention is mainly resident in the software loaded in the local Intelligent Electronic Device IED₁. Indeed, the software loaded in the local Intelligent Electronic Device IED₁ knows the data relating to the configuration and the availability of the communication link 2, which data are used for implementing the process of the invention. The computer 3 is used to control the software loaded in the local Intelligent Electronic Device.

Specifically, the process of the invention includes all or part of the following steps:
1) Indicating to the user an indicative real-time usability statistic for the teleprotection channel to each remote end, should they decide to use it to tunnel access to the relays at that/those end(s),
2) operating the protection scheme in a degraded (economised) mode (lesser or slower performance) if the teleprotection channel has low bandwidth and a greater proportion of the available bandwidth is needed in order to allow the remote end access tunnelling at an acceptable level of performance,
3) performing a software upgrade of the remote end protection relay(s) from the local end relay,
4) sending device application settings to the remote end relay(s) - these are the protection element thresholds and other configuration settings which are used to "set" the protection relay ready for its task,
5) extracting setting files from remote end relays, for instances where the user wishes to obtain the as-fitted status at the remote end (typically for analysis, or to make a clone copy at the local end),
6) getting sampled waveform records (stored power system data, often termed as "disturbance records" or "oscillograms") from the remote end(s), and making them available for saving to the user's computer at the local end,
7) sending test data over the communication link, such that testing actions can be prepared and initiated for the remote end(s) (this could, for example, include the sending of a waveform file to apply as a simulated fault condition at the remote end(s)).

At the completion of work, the user would then need to return the scheme to normal, by secure log-off, or a time-out if they fail to do it.

Related to some of the points 1)-7) mentioned above, it is possible to make the following remarks:

### Point 1)

The usability statistic would typically be shown as a speed percentage for interactions with the remote end relay(s), compared to "100%" speed which would be the nominal full speed interaction rate available for the same interactions with the local relay.

### Point 2)

There are instances when the advantages of not having to travel tens or hundreds of kilometers to a remote end substation(s) far outweigh keeping the protection scheme operating at the highest performance over the teleprotection channel. In such instances, it may be possible to run the protection scheme more slowly or less frequently, in order to free-up bandwidth for the remote tunnelling. When there is an "outage" of the circuit, this means that the circuit is electrically dead, with the circuit breakers open at all ends (terminals) of the circuit, meaning that protection is not required. If there is not an outage, but the personnel know that other protection relays are correctly protecting the circuit, it may be acceptable to temporarily run in slower-speed mode.

### Point 3)

Upgrading of the remote end software: This would involve transferring a large amount of data but would be done whilst the protection was out of service so the full bandwidth available from the teleprotection link would be used. Additionally the upgrade scheme would ensure that all settings were retained and restored after the upgrade, with a method employed such that if the upgrade failed the existing software would be automatically restored.

### Point 4)

A technique will be designed such that if the link fails during transfer of settings the remote relay restores the previous settings.

### Point 7)

There are two options available for this. One method is that a file containing test waveform sampled data (termed typically as a COMTRADE file) can be transferred via the link to the remote relay's memory and applied to that relay only as a single-ended virtual test, invoked from the local end. Additionally, the second method allows a suitable COMTRADE file to be loaded directly into the local relay memory and also via the link into the remote relay(s)' memory(ies). Then using IEEE1588 (or another equivalent precision-time protocol) to ensure synchronisation of the relays' internal clocks, all relays can be configured to apply the test simultaneously, invoking the test at a predetermined, synchronised instant at all ends.

A big advantage of the process of the invention is that commissioning, maintenance, test and troubleshooting actions in relation to all the IEDs of the power system can be done from only one IED of just one substation.

Visiting site is costly in terms of travel, and the time of the visiting technician/engineer, but also there are issues of site security and access, and supervision of the work. In addition, the protection scheme will often need to be taken out of service for the duration of the work, which traditionally included the personnel travel time between all ends. By removing the need to travel between the ends, and perform the work from one end/terminal alone, the protection scheme downtime is greatly reduced.

## Claims

1. A method of monitoring and/or configuring at least one remote Intelligent Electronic Device (IED₂) located in a remote substation (S₂) of an electrical power system, said remote Intelligent Electronic Device (IED₂) being linked by a teleprotection link (2) with a local Intelligent Electronic Device (IED₁) located in a local substation (S₁), said local Intelligent Electronic Device(IED₁), remote Intelligent Electronic Device (IED₂) and teleprotection link (2) forming a protection scheme intended to protect specific circuits of the electrical power system, the method comprising:
implementing monitoring actions on said remote Intelligent Electronic Device (IED₂) from a software running on said local Intelligent Electronic Device (IED₁), the data exchanged between the local Intelligent Electronic Device (IED₂) and the remote Intelligent Electronic Device (IED₂) during the running of the software being transmitted through the teleprotection link (2);
transferring, via the teleprotection link (2), a file containing test waveform sampled data to a memory of the remote Intelligent Electronic Device (IED₂); and
either:
a) performing a single-ended virtual test on the remote Intelligent Electronic Device (IED₂) to the remote relay, invoked from said software running on said local Intelligent Electronic Device (IED₁); or
b) further loading the file containing test waveform sampled data into a memory of the local Intelligent Electronic Device (IED₁);
using a precision time protocol, simultaneously applying a test on the local Intelligent Electronic Device (IED₁) to the local relay and on the remote Intelligent Electronic Device (IED₂) to the remote relay based on the test waveform sampled data;
wherein said local Intelligent Electronic Device (IED₁) and said remote Intelligent Electronic Device (IED₂) are each configured to measure, protect, control, and monitor the electrical power system.

2. The method according to claim 1, wherein a monitoring and/or a configuring action is to perform a software upgrade of said remote Intelligent Electronic Device (IED₂) from said local Intelligent Electronic Device (IED₁).

3. The method according to claim 1 or 2, wherein a monitoring and/or a configuring action is to get power system data stored in said remote Intelligent Electronic Device (IED₂) and send said power system data to said local Intelligent Electronic Device (IED₁) .

4. The method according to any of claims 1-3, wherein a monitoring and/or a configuring action is to set said remote Intelligent Electronic Device (IED₂) by means of application settings coming from said local Intelligent Electronic Device (IED₁).

5. The method according to any of claims 1-4, wherein a monitoring and/or a configuring action is to extract setting files from said remote Intelligent Electronic Device (IED₂) and to send the extracted setting files to said local Intelligent Electronic Device (IED₁).

6. The method according to any of claims 1-5, wherein a monitoring and/or a configuring action is to indicate to said local Intelligent Electronic Device (IED₁) an indicative real-time usability statistic of said teleprotection link (2).

7. The method according to any of claims 1-6, wherein a monitoring and/or a monitoring action is to send test data to said remote Intelligent Electronic Device over the communication link (2), from said local Intelligent Electronic Device (IED₁), such that some testing actions are prepared and initiated for said remote Intelligent Electronic Device (IED₂).

8. The method according to claim 7, wherein testing actions simulate a fault condition at said remote Intelligent Electronic Device (IED₂).

9. The method according any of claims 1-8, wherein a monitoring and/or a configuring action is to offer the ability for a user to operate the protection scheme in a degraded mode if the communication link (2) has a low bandwidth and a greater proportion of the available bandwidth is needed in order to allow said local and/or remote Intelligent Electronic Device (IED₂) access tunnelling at an acceptable level of performances.

10. The method according to any of claims 1-9, wherein the software running on said local Intelligent Electronic Device (IED₁) is controlled by means of a computer (3) linked to said local Intelligent Electronic Device (IED₁).

## Patentansprüche

1. Verfahren zum Überwachen und/oder Konfigurieren von mindestens einer entfernten intelligenten elektronischen Vorrichtung (IED₂), die sich in einer entfernten Teilstation (S₂) eines elektrischen Stromversorgungssystems befindet, wobei die entfernte intelligente elektronische Vorrichtung (IED₂) durch eine Teleprotection-Verbindung (2) mit einer lokalen intelligenten elektronischen Vorrichtung (IED₁) verbunden ist, die sich in einer lokalen Teilstation (S₁) befindet, wobei die lokale intelligente elektronische Vorrichtung (IED₁), entfernte intelligente elektronische Vorrichtung (IED₂) und Teleprotection-Verbindung (2) ein Schutzsystem bilden, die spezifische Schaltkreise des Stromversorgungssystems schützen soll, wobei das Verfahren umfasst:
Implementieren von Überwachungshandlungen an der entfernten intelligenten elektronischen Vorrichtung (IED₂) mit einer Software, die auf der lokalen intelligenten elektronischen Vorrichtung (IED₁) läuft, wobei die während des Laufens der Software zwischen der lokalen intelligenten elektronischen Vorrichtung (IED₁) und der entfernten intelligenten elektronischen Vorrichtung (IED₂) ausgetauschten Daten durch die Teleprotection-Verbindung (2) übermittelt werden;
Übertragen einer Datei, die abgetastete Testwellenformdaten enthält, mittels der Teleprotection-Verbindung (2) an einen Speicher der entfernten intelligenten elektronischen Vorrichtung (IED₂); und
entweder:
a) Durchführen eines unsymmetrischen virtuellen Tests an der entfernten intelligenten elektronischen Vorrichtung (IED₂) zu dem entfernten Relais, der von der Software aufgerufen wird, die auf der lokalen intelligenten elektronischen Vorrichtung (IED₁) läuft; oder
b) weiter Laden der Datei, die abgetastete Testwellenformdaten enthält, in einen Speicher der lokalen intelligenten elektronischen Vorrichtung (IED₁);
Verwenden eines Präzisions-Zeitprotokolls, das gleichzeitig einen Test an der lokalen intelligenten elektronischen Vorrichtung (IED₁) zu dem lokalen Relais und an der entfernten intelligenten elektronischen Vorrichtung (IED₂) zu entferntem Relais auf Grundlage der abgetasteten Testwellenformdaten anwendet;
wobei die lokale intelligente elektronische Vorrichtung (IED₁) und die entfernte intelligente elektronische Vorrichtung (IED₂) jeweils konfiguriert sind, um das elektrische Stromversorgungssystem zu messen, zu schützen, zu steuern und zu überwachen.

2. Verfahren nach Anspruch 1, wobei eine Überwachungs- und/oder eine Konfigurierungshandlung darin besteht, mit der lokalen intelligenten elektronischen Vorrichtung (IED₁) eine Softwareaktualisierung der entfernten intelligenten elektronischen Vorrichtung (IED₂) durchzuführen.

3. Verfahren nach Anspruch 1 oder 2, wobei eine Überwachungs- und/oder eine Konfigurierungshandlung darin besteht, Stromversorgungssystemdaten, die in der entfernten intelligenten elektronischen Vorrichtung (IED₂) gespeichert sind, zu erlangen und die Stromversorgungssystemdaten an die lokale intelligente elektronische Vorrichtung (IED₁) zu senden.

4. Verfahren nach einem der Ansprüche 1-3, wobei eine Überwachungs- und/oder eine Konfigurierungshandlung darin besteht, die entfernte intelligente elektronische Vorrichtung (IED₂) mittels Anwendungseinstellungen, die von der lokalen intelligenten elektronischen Vorrichtung (IED₁) kommen, einzustellen.

5. Verfahren nach einem der Ansprüche 1-4, wobei eine Überwachungs- und/oder eine Konfigurierungshandlung darin besteht, Einstellungsdateien aus der entfernten intelligenten elektronischen Vorrichtung (IED₂) zu extrahieren und die extrahierten Einstellungsdateien an die lokale intelligente elektronische Vorrichtung (IED₁) zu senden.

6. Verfahren nach einem der Ansprüche 1-5, wobei eine Überwachungs- und/oder eine Konfigurierungshandlung darin besteht, der lokalen intelligenten elektronischen Vorrichtung (IED₁) eine indikative Echtzeit-Nutzbarkeitsstatistik der Teleprotection-Verbindung (2) anzuzeigen.

7. Verfahren nach einem der Ansprüche 1-6, wobei eine Überwachungs- und/oder eine Konfigurierungshandlung darin besteht, von der lokalen intelligenten elektronischen Vorrichtung (IED₁) Testdaten über die Kommunikationsverbindung (2) derart an die entfernte intelligente elektronische Vorrichtung zu senden, dass für die entfernte intelligente elektronische Vorrichtung (IED₂) einige Testhandlungen vorbereitet und initiiert werden.

8. Verfahren nach Anspruch 7, wobei die Testhandlungen einen Fehlerzustand an der entfernten intelligenten elektronischen Vorrichtung (IED₂) simulieren.

9. Verfahren nach einem der Ansprüche 1-8, wobei eine Überwachungs- und/oder eine Konfigurierungshandlung darin besteht, für einen Anwender die Fähigkeit zu bieten, das Schutzsystem in einem degradierten Modus zu betreiben, wenn die Kommunikationsverbindung (2) eine geringe Bandbreite aufweist und ein größere Anteil der verfügbaren Bandbreite benötigt wird, um der lokalen und/oder entfernten intelligenten elektronischen Vorrichtung (IED₂) Zugriffstunneling bei einem akzeptablen Leistungsniveau zu ermöglichen.

10. Verfahren nach einem der Ansprüche 1-9, wobei die Software, die auf der lokalen intelligenten elektronischen Vorrichtung (IED₁) läuft, mittels eines Computers (3) gesteuert wird, der mit der lokalen intelligenten elektronischen Vorrichtung (IED₁) verbunden ist.

## Revendications

1. Procédé de surveillance et/ou de configuration d'au moins un dispositif électronique intelligent (IED₂) distant situé dans une sous-station distante (S₂) d'un système d'énergie électrique, ledit dispositif électronique intelligent (IED₂) distant étant lié par une liaison de téléprotection (2) à un dispositif électronique intelligent (IED₁) local situé dans une sous-station locale (S₁), ledit dispositif électronique intelligent (IED₁) local, ledit dispositif électronique intelligent (IED₂) distant et ladite liaison de téléprotection (2) formant un schéma de protection destiné à protéger des circuits spécifiques du système d'énergie électrique, le procédé comprenant :
la mise en oeuvre d'actions de surveillance sur ledit dispositif électronique intelligent (IED₂) distant à partir d'un logiciel s'exécutant sur ledit dispositif électronique intelligent (IED₁) local, les données échangées entre le dispositif électronique intelligent (IED₁) local et le dispositif électronique intelligent (IED₂) distant au cours de l'exécution du logiciel étant transmises par l'intermédiaire de la liaison de téléprotection (2) ;
le transfert, via la liaison de téléprotection (2), d'un fichier contenant des données échantillonnées de forme d'onde de test à une mémoire du dispositif électronique intelligent (IED₂) distant ; et
soit :
a) la réalisation d'un test virtuel asymétrique sur le dispositif électronique intelligent (IED₂) distant pour le relais distant, invoqué depuis ledit logiciel s'exécutant sur ledit dispositif électronique intelligent (IED₁) local ; soit
b) en outre le chargement du fichier contenant des données échantillonnées de forme d'onde de test dans une mémoire du dispositif électronique intelligent (IED₁) local ;
en utilisant un protocole de temps de précision, l'application simultanée d'un test sur le dispositif électronique intelligent (IED₁) local pour le relais local et sur le dispositif électronique intelligent (IED₂) distant pour un relais distant sur la base des données échantillonnées de forme d'onde de test ;
dans lequel ledit dispositif électronique intelligent (IED₁) local et ledit dispositif électronique intelligent (IED₂) distant sont chacun configurés pour mesurer, protéger, commander et surveiller le système d'énergie électrique.

2. Procédé selon la revendication 1, dans lequel une action de surveillance et/ou de configuration consiste à réaliser une mise à niveau logicielle dudit dispositif électronique intelligent (IED₂) distant à partir dudit dispositif électronique intelligent (IED₁) local.

3. Procédé selon la revendication 1 ou 2, dans lequel une action de surveillance et/ou de configuration consiste à obtenir des données de système d'énergie stockées dans ledit dispositif électronique intelligent (IED₂) distant et à envoyer lesdites données de système d'énergie audit dispositif électronique intelligent (IED₁) local.

4. Procédé selon l'une quelconque des revendications 1-3, dans lequel une action de surveillance et/ou de configuration consiste à régler ledit dispositif électronique intelligent (IED₂) distant au moyen de réglages d'application provenant dudit dispositif électronique intelligent (IED₁) local.

5. Procédé selon l'une quelconque des revendications 1-4, dans lequel une action de surveillance et/ou de configuration consiste à extraire des fichiers de réglages dudit dispositif électronique intelligent (IED₂) distant et à envoyer les fichiers de réglages extraits audit dispositif électronique intelligent (IED₁) local.

6. Procédé selon l'une quelconque des revendications 1-5, dans lequel une action de surveillance et/ou de configuration consiste à indiquer audit dispositif électronique intelligent (IED₁) local une statistique d'utilisabilité en temps réel indicative de ladite liaison de téléprotection (2).

7. Procédé selon l'une quelconque des revendications 1-6, dans lequel une action de surveillance et/ou de configuration consiste à envoyer des données de test audit dispositif électronique intelligent distant sur la liaison de communication (2), à partir dudit dispositif électronique intelligent (IED₁) local, de sorte que certaines actions de test soient préparées et initiées pour ledit dispositif électronique intelligent (IED₂) distant.

8. Procédé selon la revendication 7, dans lequel des actions de test simulent une condition de défaut au niveau dudit dispositif électronique intelligent (IED₂) distant.

9. Procédé selon l'une quelconque des revendications 1-8, dans lequel une action de surveillance et/ou de configuration consiste à offrir la possibilité à un utilisateur d'exploiter le schéma de protection dans un mode dégradé si la liaison de communication (2) présente une petite bande passante et une proportion plus grande de la bande passante disponible est nécessaire pour permettre audit dispositif électronique intelligent local et/ou audit dispositif électronique intelligent (IED₂) distant d'accéder à une tunnellisation à un niveau acceptable de performance.

10. Procédé selon l'une quelconque des revendications 1-9, dans lequel le logiciel s'exécutant sur ledit dispositif électronique intelligent (IED₁) local est commandé au moyen d'un ordinateur (3) lié audit dispositif électronique intelligent (IED₁) local.
